Europäisches Patentamt

European Patent Office

Office européen des brevets

(11) Publication number: **0 314 869**
**A2**

## EUROPEAN PATENT APPLICATION

(21) Application number: **88109011.2**

(22) Date of filing: **06.06.88**

(51) Int. Cl.⁴: **B23Q 35/128**

(30) Priority: **03.11.87 CA 550947**

(43) Date of publication of application:
**10.05.89 Bulletin 89/19**

(84) Designated Contracting States:
**CH DE FR GB IT LI**

(71) Applicant: **WESTINGHOUSE CANADA INC.**
**Box 510**
**Hamilton Ontario L8N 3K2(CA)**

(72) Inventor: **Enn, Vall**
**3281 Douglas Street**
**Burlington Ontario, L7N 1G8(CA)**

(74) Representative: **Haug, Dietmar et al**
**Patentanwälte Andrae, Flach, Haug, Kneissl**
**Steinstrasse 44**
**D-8000 München 80(DE)**

(54) **Line tracer.**

(57) In a co-ordinate drive circular scanning pattern tracer, command marks give rise to pulses phase delayed 90° with respect to the normal tracing pulses. In a system using a sinusoidal speed signal and sample and hold circuits to produce co-ordinate drive signals one sample and hold circuit compares the tracing pulses to the speed signal and the other sample and hold circuit compares 90° delayed tracing pulses to the speed signals. The 90° delayed tracing pulses are compared to the output pulses of the pattern tracer to detect the presence of the pulses produced by command marks. If such command marks a detected and command signal is produced which may be used to control the velocity of the system.

FIG.1

EP 0 314 869 A2

## LINE TRACER

### Field Of The Invention:

This invention relates to optical pattern tracing controls and in particular, to controls of the type which repetitively scan the pattern to be followed in a circular manner, derive a signal from such scanning operation and utilize the signal to control coordinate drive motors.

### Description Of The Prior Art:

There are various types of optical pattern tracing machine control systems including scanning and nonscanning tracing heads, friction and coordinate drive machines, edge and line tracers. This invention has particular application to a pattern tracer of the circular scanning type for operation with a coordinate drive system which may be used for either line or edge tracing.

By a circular scanning tracer is meant a tracer which views the pattern in such a manner that the point observed by the tracing head is caused to rotate repetitively so as to describe a circular path on the surface bearing the pattern when the head is stationary. Naturally, when the head is in translational motion, the point scanned by the tracing head will more closely approach an epicycle.

The detector in the tracing head is arranged to produce a signal indicative of a change in illumination of the detector. In this way, the device may operate either as a line tracer, i.e., a tracer of a narrow mark on a surface area, or as an edge tracer, i.e., a tracer of the transition from a reflective to a less reflective area as in the case when the pattern is a silhouette. The signal representing this transition is then processed and used to control a pair of motors which, when associated with suitable machinery, will cause the tracing head and related machine tool to move in a plane in accordance with the pattern as controlled by the motors.

It will be appreciated that when, in accordance with general practice in this field, the convolutions performed by the tracing head are similarly performed by the machine tool, which may for example be a cutting torch, and in this way the material to be cut will be shaped into the same form as the pattern being traced by the tracing head.

The command marks are described in Canadian Application Serial No. 103,940. Means of detecting and utilizing these command marks have been previously described, however, they are not applicable to all such tracing systems. U.S. Patent No. 3,883,735, describes a circular scanning tracing system, similar to the present system, except that the scanning head is required to produce both a sine and cosine wave to provide the necessary $\dot{X}$ and Y drive signals. An alternative solution is to utilize a single sine wave generator and displace the sampling pulse 90° to produce the necessary coordinate drive signals. With such phase delayed sampling signal, it is possible to provide an alternative form of a command mark detection system.

### SUMMARY OF THE INVENTION

In accordance with the present invention, the command mark is a mark on the pattern at 90° to the pattern. The presence of such a command mark is detected by comparing the signal produced by the command mark with the 90° phase delayed sampling signal. Substantial coincidence of these two signals indicates the presence of a command mark. Repetitious detection of coincidence is used to assure the presence of a command mark and initiate a control such as slowdown.

A clearer understanding of our invention may be had from the following description and drawings.

### BRIEF DESCRIPTION OF THE DRAWINGS

Figure 1 is a block diagram of a system in accordance with my invention;

Figure 2 is a detailed circuit diagram of the system in accordance with my invention; and

Figure 3 is a series of wave forms useful in explaining the operation of the system.

### DESCRIPTION OF THE PREFERRED EMBODIMENT

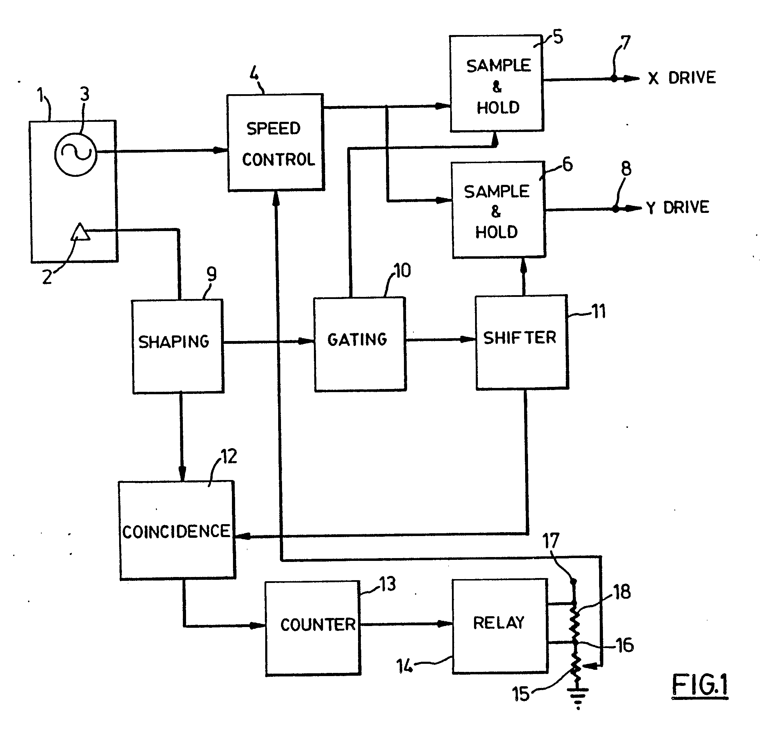

Considering first Figure 1, there is shown in the block diagram a tracing system including a tracing head 1, including a photosensor 2 and a sine wave generator 3. The output from the sine wave generator is applied to a speed control circuit 4 and from the speed control circuit to a pair of sample-and-hold circuits 5 and 6. The output from the sample-and-hold circuits are applied through terminals 7 and 8 to the X and Y drive systems (not shown). The output from the photocell 2, which is driven by the scanner mechanism 1, is applied to the shaping circuit 9 and from the shaping circuit to a gating circuit 10. The output fron the gating circuit is applied to sample-and-hold circuit 5 and to a 90° phase shifter 11 and thence, to the sample-and-hold circuit 6. The circuit to this point is a standard prior art circular scanning, coordinate drive, pattern tracing system. However, the signal from shaping circuit 9 is also applied to a coincidence circuit 12 and a further output from the 90° phase shifter 11, is applied to the coincidence circuit 12. The output from the coincidence cirucit 12 is applied to counter 13. The output from counter 13 is used to control relay 14. The manual speed control potentiometer 15 is supplied with a potential from terminal 16, which in turn is connected to an external source of potential at terminal 17, through resistor 18. The slider of potentiometer 15 is connected to the speed control 4 and used to control the amplitude of the sinusoid applied to the sample-and-hold circuits.

## OPERATION OF THE SYSTEM

The scanner 1 includes a motor which drives the sine wave generator 3 and the photocell 2, in such a manner that the sine wave generator produces a sine wave synchronous with the motor drive and the photocell is caused to scan a circle over the pattern, in such a manner as to produce an output each time photocell 2 crosses or encounters the pattern.

In the present case, the pattern is assumed to be in the form of a line and command marks are assumed to take the form of an extreme widening of the line to such a degree that the line exceeds the width of the radius of the scan. As the photocell 2 encounters the line pattern, it produces a change in output which is applied to the shaping circuit 9 and converted into a pulse of fixed amplitude and duration. Since such a pulse is produced, both on the forward edge of the scan and on the rear edge of the scan, that is, as the scan crosses the pattern, both in the advanced direction of travel and also in the rear direction, wtih respect to its direction of travel, it is necessary to eliminate the rear pulses to eliminate ambiguity. The pulses are therefore applied to the gating circuit 10, which selects from pulses only those in the forward direction. These pulses are then applied directly to sample-and-hold circuit 5. The pulses are also applied to the phase shifter 11 which phase shifts the pulse 90° and applies the pulse to the sample-and-hold circuit 6. Also applied to the sample-and-hold circuit 6 is the output of the sine wave from the speed control 4. The speed control 4 varies the amplitude of the sine wave in accordance with the desired speed of the system, which may be manually adjusted by moving the slider on potentiometer 15. The output from the sample-and-hold circuits 5 and 6 is therefore the coordinate information indicating that necessary speed in the X and Y directions in order to cause the X and Y drive to move the machine with the necessary velocity to maintain the scanner over the pattern at the desired speed.

A further output from the shaping circuit 9 includes any signal produced by a command mark. If the command mark occurs at 90° to the direction of travel of the tracer, a signal is present at this phase angle. Also applied to the coincidence circuit 12 is the 90° phase shifted sampling signal from phase shifter 11. Circuit 12 determines when there is a substantial coincidence with the phase delayed sampling signal and the signal from shaping circuit 9. If such a coincidence is encountered, a pulse is applied to counter 13. After a selected number of such a coincidence are detected, counter 13 produces an output which operates relay 14. Relay 14 is normally closed but when energized by the counter output opens its circuit and introduces resistor 18 in series with the speed control potentiometer 15. This reduces the speed signal applied to the speed conttol 4 and thus the system operates at a reduced speed when a command mark is detected.

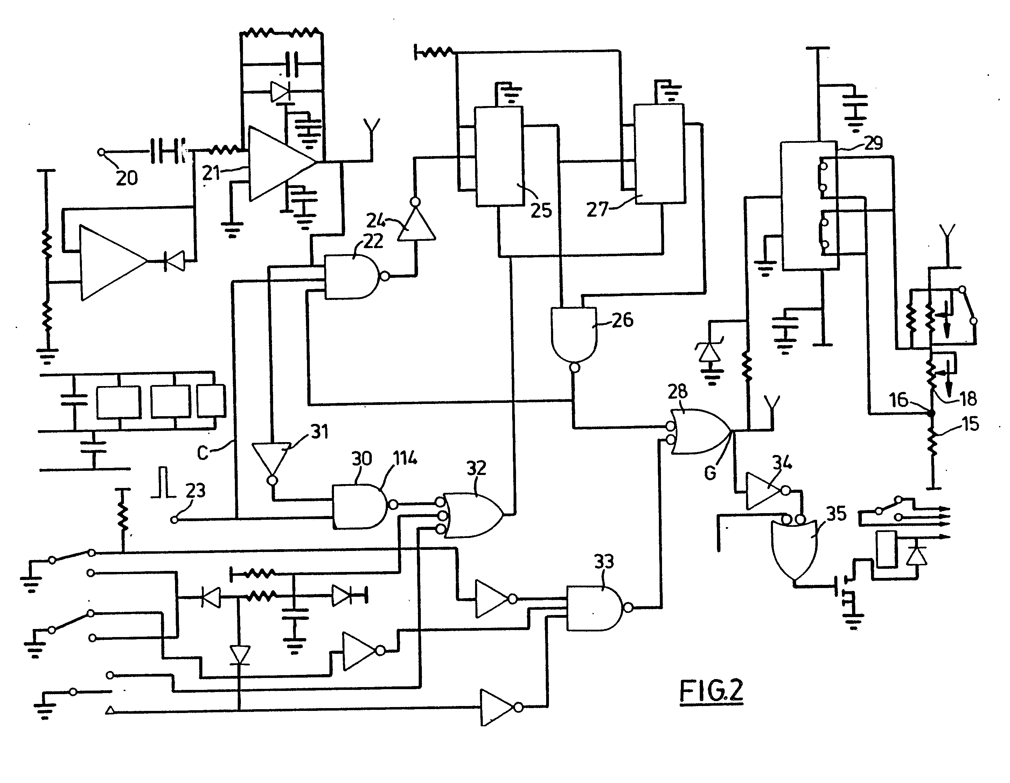

Turning now to Figure 2, there is shown a detail circuit diagram of a portion of the system of Figure 1 in particular, those portions of' Figure 1 including blocks 12, 13 and 14. In Figure 2 the output from the shaping circuit is applied to terminal 20 and thus to amplifier 21. The amplifier if provided with the normal supplies and potentials required for its operation which will not be described. The output for amplifier 21 is applied to NAND gate 22. Also applied to NAND gate 22 from terminal 23 is the 90° phase shifted sampling pulse from phase shifter 11. Also applied to NAND gate 22 is a disable pulse to its third terminal derived in a manner which will be later described.

The output from the NAND gate 22 is applied through inverter 24 and thence to flip-flop 25. The output from flip-flop 25 is applied to NAND gate 26 and to flip-flop 27. The output from flip-flop 27 is applied to NAND gate 26. The output from NAND gate 26 is the third input to NAND gate 22 and is also applied to NOR gate 28. The output from NOR gate 28 is applied to analog switch 29. The terminals of analog switch 29 are connected across resistor 18 which is the same as resistor 18 in Figure 1 and it will be seen that the speed control potentiometer 15 is connected to the lower end, that is terminal 16 as shown in Figure 1.

A further output from terminal 23 is applied to NAND gate 30 and an inverted output from amplifier 21 is also applied to NAND gate 30 to inverter 31. The output from NAND gate 30 is applied to NOR gate 32. Two further outputs are applied to NOR gate 32. One input from the high-low switch on the operators control panel and one from the on-off slow-down control on the operator's panel. A further input is applied to NOR gate 32 from the strip switch on the operator's controlled panel. These three inputs control the operation of the NOR gate 32 and the output of NOR gate 32 is applied to the reset terminal of flip-flops 25 and 27.

A further input is applied to NOR gate 28. This input is derived from NAND gate 33. The inputs to NAND gate 33 include an input from the high-low range switch on the operator's control panel, an input from the slow-down control switch on the operator's control panel, and an input from the start switch on the operator's control panel. The output from NOR gate 28 is applied not only to the analog switch 29 but also to an inverter 34 and a NOR gate 35. The output from NOR gate 35 is used for a control function later to be described.

## OPERATION OF THE DETAILED CIRCUIT DIAGRAM

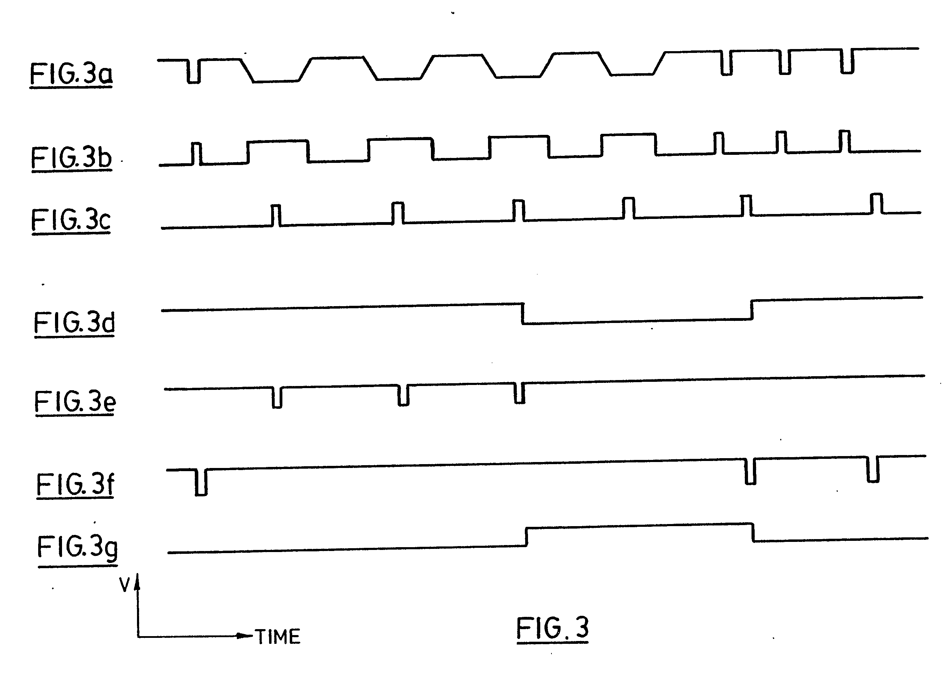

Considering both Figures 2 and 3, the input to terminal 20 is as shown at A in Figure 3. The output from amplifier 21 is as shown at B in Figure 3. This is applied to NAND circuit 22. The input to terminal 23 is as shown at C in Figure 3. When the output from amplifier 21 and the input to terminal 23 coincide, disregarding the third input to the NAND circuit 22, an output is produced and applied to inverter 24. This output is as shown at E in Figure 3 and is inverted and applied to the input of counter 25. The output from flip-flop 25 is initially zero. On the first pulse shown in E at Figure 3, the output from flip-flop 25 becomes a 1. On the next pulse, the output becomes a 0 and the output on flip-flop 27 becomes a 1. On the next input to flip-flop 25, the output becomes a 1. Now both inputs to NAND 26 are 1's and the inverted output from NAND 26 is as shown at B in Figure 3 and this output is applied to NOR gate 28. It is also applied to NAND gate 22 and inhibits further counting.

Disregarding the further input to NOR gate 28, the output from NOR gate 28 is as shown at G in Figure 3 and this is applied to the analog switch 29 which opens its contacts and introduces resistor 18 into the slow-down circuit, thus reducing the speed of the control system.

The output from NOR gate 35 may be used to provide a further control such as to disable the height control of a plasma torch and prevent changes in torch height at low speed.

## Claims

1. A pattern tracing system, comprising a circular rotating scanner for producing pulses when the scanner views the pattern and also a sinusoidal waveform synchronized with the rotation of the scanner, means to phase delay by ninety degrees said pulses and produce phase delayed pulses, means to sample said sinusoidal waveform at times determined by said pulses to produce a first co-ordinate drive signal and at times determined by said phase delayed pulses to produce a second co-ordinate drive signal and means to utilize said co-ordinate drive signals to control the co-ordinate movement of said tracing system, means to derive from said scanner command pulses indicative of marks on the pattern at right angles to the direction of the pattern at the location being scanned means to detect coincidence of said command pulses and said phase delayed pulses and produce, in response to coincidence, a command signal.

2. A pattern tracing system as claimed in Claim 1, wherein said command signal controls the co-ordinate drive speeds of said system.

3. A pattern tracing system as claimed in Claim 1, wherein said pulses are gated to select only those pulses generated when said scanner is viewing the pattern in the generally desired direction of travel, said gated pulses and phase delayed gated pulses are used to sample said sinusoid and produce said co-ordinate signals and said command pulses are not selected but are only compared to said phase delayed gated pulses to produce a command signal in response to substantial coincidence of said pulses and said command pulses.

4. A pattern tracing system including an optical detectable pattern including optically detectable command marke substantially at right angles to the direction of the pattern adjacent said command marks, a circular scanning optical scanner for viewing said pattern and a sinusoidal wave form generator for producing a sinusoidal wave form synchronous with said scanner, means to derive from said optical scanner a series of pulses indicative of the time of scanning of said pattern by said scanner means to select from said series of pulses those pulses produced by the scanning of said pattern in the desired direction of tracing, means to phase delay said selected pulses, to produce phase delayed selected pulses, means to sample said sinusoidal wave form at times determined by said selected pulses to produce a first co-ordinate drive signal and at times determined by said phase delayed selected pulses to produce a second co-ordinate drive signal, means to control the co-ordinate movement of said tracing system in accordance with said first and second co-ordinate drive signal with a velocity determined by the amplitude of said sinusoidal wave form, means to compare said series of pulses with said phase delayed selected pulses and produce in response to time coincidence a command signal.

5. A pattern tracing system as claimed in Claim 4, wherein said command signal controls the amplitude of said sinusoidal wave form.

6. A pattern tracing system as claimed in Claim 4, wherein said command signal is only produced in response to a plurality of coincidences of said series of pulses and said phase delayed selected pulses.

FIG.1

EP 0 314 869 A2

FIG.2

FIG.3a

FIG.3b

FIG.3c

FIG.3d

FIG.3e

FIG.3f

FIG.3g

V

TIME

FIG. 3

EP 0 314 869 A2